# EUROPÄISCHE PATENTSCHRIFT

(11) **EP 2 697 410 B1**
(45) Veröffentlichungstag und Bekanntmachung des Hinweises auf die Patenterteilung: **03.06.2015**
(21) Anmeldenummer: 12723825.1
(22) Anmeldetag: 07.04.2012
(51) Int. Cl.: C25B 9/02, C25B 9/08, H01M 8/02

(54) **ALTERNATIVER EINBAU EINER GAS-DIFFUSIONS-ELEKTRODE IN EINE ELEKTROCHEMISCHE ZELLE MIT PERCOLATORTECHNOLOGIE**
ALTERNATIVE INSTALLATION OF A GAS DIFFUSION ELECTRODE IN AN ELECTROCHEMICAL CELL HAVING PERCOLATOR TECHNOLOGY
VARIANTE DE MONTAGE D'UNE ÉLECTRODE À DIFFUSION GAZEUSE DANS UNE CELLULE ÉLECTROCHIMIQUE À TECHNOLOGIE DE PERCOLATION

(30) Priorität: 15.04.2011 DE 102011017264
(43) Veröffentlichungstag der Anmeldung: 19.02.2014
(73) Patentinhaber: Uhdenora S.p.A, 20134 Milano (IT); Bayer Intellectual Property GmbH, 40789 Monheim am Rhein (DE)
(72) Erfinder: WOLTERING, Peter, 48485 Neukirchen (DE); KIEFER, Randolf, 45772 Marl (DE); WEBER, Rainer, 51519 Odenthal (DE); BULAN, Andreas, 40764 Langenfeld (DE)
(74) Vertreter: Reitstötter Kinzebach
(86) Internationale Anmeldenummer: PCT/EP2012/001533
(87) Internationale Veröffentlichungsnummer: WO 2012/139741

(56) Entgegenhaltungen:
- WO-A2-03/031690
- US-A- 1 971 763
- US-A1- 2005 183 951

## Beschreibung

Die vorliegende Erfindung kann in den technischen Bereich der elektrochemischen Geräte eingeordnet werden.

Die vorliegende Erfindung betrifft einen elektrochemischen Apparat wie er im Oberbegriff des Anspruch 1 charakterisiert ist. Hierunter wird ein Apparat verstanden, in dem eine elektrochemische Reaktion abläuft, wie beispielsweise bei Elektrolyseuren, Batterien, Akkumulatoren oder Brennstoffzellen.

Zum Beispiel bei der Elektrolyse wird elektrische Energie in chemische Energie umgewandelt. Dies wird erreicht durch die Aufspaltung einer chemischen Verbindung unter Einwirkung eines elektrischen Stroms. Die als Elektrolyt eingesetzte Lösung enthält positiv und negativ geladene Ionen. Als Elektrolyte kommen demzufolge hauptsächlich Säuren, Basen oder Salzlösungen zur Anwendung.

Beispielsweise bei der elektrolytischen Herstellung von Halogengasen aus wässriger Alkalihalogenidlösung - hier mit Natriumchlorid dargestellt - läuft auf Seiten der Anode die nachstehende Reaktion ab:

(1) 4 NaCl → 2 Cl₂ + 4 Na⁺ + 4e⁻

Die frei werden Alkali-Ionen gelangen zur Kathode und bilden mit den dort entstehenden Hydroxidionen Alkalilauge. Außerdem wird Wasserstoff gebildet:

(2) 4 H₂O + 4 e⁻ → 2 H₂ + 4 OH⁻

Dabei wird die entstehende Lauge vom Alkali-Halogenid, das der Anodenseite zugeführt wird, über eine Kationenaustauscher-Membran getrennt, und dadurch voneinander separiert. Derartige Membranen sind Stand der Technik und kommerziell von verschiedenen Anbietern erhältlich.

Das Standardpotential an der Anode, das sich bei Ablauf von oben stehender Reaktion ausbildet, beträgt im Fall der Chlorbildung + 1,36 V, wobei das Standardpotential an der Kathode bei Ablauf von oben stehender Reaktion - 0,86 V beträgt. Ein derartiges Zellendesign ist beispielsweise aus der WO98/55670 bekannt. Aus der Differenz dieser beiden Standardpotentiale resultiert ein immenser Energieeintrag, der nötig ist, um diese Reaktionen durchzuführen. Um diesen Differenzbetrag zu minimieren, werden nun Gas-Diffusions-Elektroden (nachfolgend als GDE abgekürzt) auf der Kathodenseite eingesetzt, so dass Sauerstoff über das System eingetragen wird und dadurch bedingt an der Kathode nicht mehr Reaktion (2) abläuft, sondern die nachfolgende Reaktion:

(3) O₂ + 2 H₂O + 4 e⁻ → 4 OH⁻

Der Sauerstoff kann hierbei als reines Gas oder über Luft eingetragen werden. Die der Chlor-Alkali-Elektrolyse mit Gas-Diffusions-Elektroden zugrundeliegende Gesamtreaktion ergibt sich daraus wie folgt:

(4) 4 NaCl + O₂ + 2 H₂O → 4 NaOH + 2 Cl₂

Da das Standardpotential der Reaktion (3) bei + 0,4 V liegt, führt im Vergleich zur herkömmlichen Elektrolyse mit Wasserstoffbildung die GDE-Technik zu einer beträchtlichen Energieeinsparung.

Gas-Diffusions-Elektroden werden seit vielen Jahren in Batterien, Elektrolyseuren und Brennstoffzellen eingesetzt. Der elektrochemische Umsatz findet innerhalb dieser Elektroden nur an der sogenannten Drei-Phasen-Grenze statt. Als Drei-Phasen-Grenze wird der Bereich bezeichnet, bei dem Gas, Elektrolyt und metallischer Leiter aufeinander treffen. Damit die GDE effektiv arbeitet, sollte der metallische Leiter gleichzeitig ein Katalysator für die gewünschte Reaktion sein. Typische Katalysatoren in alkalischen Systemen sind Silber, Nickel, Mangandioxid, Kohlenstoff und Platin. Damit die Katalysatoren besonders wirksam sind, muss deren Oberfläche groß sein. Dies wird erreicht durch feine oder poröse Pulver mit innerer Oberfläche.

Probleme bei der Anwendung derartiger Gas-Diffusions-Elektroden, wie sie beispielsweise in der US 4614575 offenbart sind, ergeben sich dadurch, dass der Elektrolyt, bedingt durch Kapillarwirkung in diese feinporigen Strukturen eindringen und diese füllen würde. Dieser Effekt hätte zur Folge, dass der Sauerstoff nicht mehr durch die Poren diffundieren könnte, wodurch die beabsichtigte Reaktion zum Stillstand käme.

Damit die Reaktion an der Drei-Phasen-Grenze effektiv ablaufen kann, muss oben genanntes Problem vermieden werden, indem die Druckverhältnisse entsprechend gewählt werden. Die Ausbildung einer Flüssigkeitssäule in einer ruhenden Flüssigkeit, wie dies in der Elektrolytlösung der Fall ist, bedingt beispielsweise, dass der hydrostatische Druck am unteren Ende der Säule am höchsten ist, was oben beschriebenes Phänomen verstärken würde.

Dieses Problem wird wie in der einschlägigen Literatur zu finden ist, in Form von Fallfilmverdampfern gelöst. Dabei lässt man den Elektrolyten - beispielsweise Natronlauge NaOH oder Kalilauge KOH - zwischen der Membran und der GDE durch ein poröses Medium laufen, womit die Ausbildung einer hydrostatischen Säule verhindert wird. Man spricht auch von Percolatortechnologie.
In WO 03/42430 ist eine solche Elektrolysezelle beschrieben, die sich dieses Prinzip für die Chlor-Alkali-Elektrolysereaktion mit einer Sauerstoffverbrauchsreaktion zunutze macht. Der Sauerstoff ist dabei vom porösen Medium durch die Gas-Diffusions-Elektrode getrennt und wird durch eine leitfähige Stützstruktur und ein leitfähiges flexibles Federelement mit dem porösen Medium - dem Percolator - verpresst.

Ein derartiges Prinzip findet sich beispielsweise auch in der DE102004018748. Hier ist eine elektrochemische Zelle beschrieben, die aus wenigstens einer Anodenhalbzelle mit einer Anode, einer Kathodenhalbzelle mit einer Kathode und einer zwischen Anodenhalbzelle und Kathodenhalbzelle angeordneten lonenaustauschermembran besteht, wobei die Anode und/oder Kathode eine Gas-Diffusions-Elektrode ist, zwischen der Gas-Diffusions-Elektrode und der Ionenaustauscher-Membran ein Spalt, ein Elektrolytzulauf oberhalb des Spalts und ein Elektrolytablauf unterhalb des Spalts sowie ein Gaseintritt und ein Gasaustritt angeordnet sind, wobei der Elektrolytzulauf mit einem Elektrolytvorlagebehälter verbunden ist und einen Überlauf aufweist.

Der Einsatz der Gas-Diffusions-Elektrode in den beschriebenen Elektrolyseapparaten hat aber nicht nur die Aufgabe, die katalytische Sauerstoffverbrauchsreaktion zu ermöglichen. Die Elektrode soll darüber hinaus auch die Trennung von Elektrolyten und Gas beidseitig der GDE sicherzustellen. Dazu ist eine gas- bzw. flüssigkeitsdichte Abdichtung der Gas-Diffusions-Elektroden durch die gewählte Befestigungsmethode zwingend erforderlich, um vor allem nach Elektrolyteintritt in die Zelle zu gewährleisten, dass der Elektrolyt an der Gas-Diffusions-Elektrode bestimmungsgemäß entlang geleitet wird und nicht über undichte Bereiche und damit alternative Wege zum Elektrolytauslass aus der elektrochemischen Zelle gelangt und somit für die Reaktion nicht zur Verfügung steht.

Da die Gas-Diffusions-Elektroden einem Alterungsprozeß und damit Verschleiß unterliegen, müssen diese nach einer bestimmten Betriebszeit ausgetauscht werden. Der Stand der Technik sieht vor, dass die Gas-Diffusions-Elektroden in die Kathodenhalbschalen eingeschweißt werden, was einen Austausch sehr aufwendig macht.

Dies ist beispielsweise in DE 103 30 232 A1 ausgeführt. Hier wird eine elektrochemische Halbzelle beschrieben, bei der die GDE einen beschichtungsfreien Randbereich aufweist, der mit einer Haltestruktur verbunden ist, die mit einer elektrisch leitfähigen Platte versehen ist. Eine derartige Fixierung der GDE, die eine gleichzeitige Abdichtung des Elektrolytraums vom Gasraum erlaubt, ist in Zusammenspiel mit einem Percolator eher nachteilig, da es zu Beschädigungen des Percolatormaterials und einer Blockade des Elektrolytflusses über den Percolator kommen kann. Außerdem ist es beim Zusammenbau dieser Art von Anordnung notwendig, dass die GDE über die gesamte Breite der elektrochemischen Zelle absolut gleichmäßig unter die elektrisch leitfähige Platte 3 geschoben wird, da ansonsten die elektrische Platte den freien Flüssgkeitsquerschnitt des parallel angeordneten Percolators uneinheitlich verändert, so dass eine Gleichverteilung der Flüssigkeit nicht gewährleistet wird, die für einen Einwand-freien Betrieb der elektrochemischen Zelle erforderlich ist. Dies sicherzustellen ist bei einer solchen Anordnung sehr schwierig.

Eine alternative Befestigungsmöglichkeit der Gas-Diffusions-Elektroden ist in DE 101 52 792 erläutert. Hier wird eine Methode beschrieben, eine Gas-Diffusions-Elektrode mittels eines falzartig umlaufenden Rahmen mit der Grundstruktur des Elektrolyseapparats zu verbinden. Als reines Klemmverfahren ist dieses Verfahren in bezug auf Austauschbarkeit vorteilhafter als das in DE 103 30 232 beschriebene. Da aber auch in diesem Fall zur Minimierung der ohmschen Verluste die Verbindung des Rahmens mit der Grundstruktur über Schweiß- oder Lötverfahren ausgeführt ist, bleibt sowohl der Nachteil der schwierigen Austauschbarkeit als auch der Verlust an aktiver Elektrolysefläche durch den Schweißbereich bestehen. Schließlich ist aus US 2005/0183951 A1 eine Elektrolysezelle bekannt, die eine Anodenhalbschale und eine Kathodenhalbschale umfasst, die im Bereiche ihrer Flansche zusammengesetzt sind. Eine Gasdiffusionselektrode ist zusammen mit einem Perkolatormedium mit einem Winkel von weniger als 90° in einer Aussparung des Rahmens eingeklemmt.

Aufgabe der vorliegenden Erfindung ist es deshalb, eine alternative Befestigungsmöglichkeit der Gas-Diffusions-Elektrode in einer elektrochemischen Zelle zu finden, die einen einfachen Ein- und Ausbau gewährleistet, die den Gasraum gegenüber dem Elektrolytraum hinreichend abdichtet und bei der eine möglichst große Elektrodenfläche aktiv zur elektrochemischen Reaktion genutzt werden kann.

Die Aufgabe wird gelöst durch eine elektrochemische Zelle, umfassend eine Anoden- (12) und eine Kathodenhalbschale (11), die durch eine Membran (5) voneinander separiert werden, aufweisend die entsprechenden Elektroden, und die Anoden- (12) und die Kathodenhalbschale (11) jeweils eine Außenwandung (13) besitzen, die jeweils im Kontaktbereich beider Halbschalen Flanschbereiche (14a, 14b, 15a, 15b) aufweisen, welche rahmenartig ausgestaltet sind, und eine Gas-Diffusions-Elektrode (3), die aus einem Flüssigkeits-durchlässigen Träger besteht, der mit einem Katalysatormaterial beschichtet ist, wobei die Gas-Diffusions-Elektrode (3) an ihrem unteren Rand (17) einen nicht mit Katalysator beschichteten Bereich aufweist, der am unteren Ende der elektrochemischen Zelle (16) im Kontaktbereich beider Halbschalen zwischen die Flanschbereiche der Außenwandung der Kathodenhalbschale (15b) und die Flanschbereiche der Außenwandung der Anodenhalbschale (14b) ragt, und ein poröses Medium (8) parallel zwischen der Gas-Diffusions-Elektrode (3) und der Membran (5) angeordnet ist, sowie Vorrichtungen zum Zu- und Abführen von Gas (20, 21) und Elektrolyt (9, 10), wobei ein Gasraum (22) von einem Elektrolytraum (7) durch entsprechende Mittel (23) abgegrenzt wird.

Insbesondere zeichnet sich die vorliegende Erfindung dadurch aus, dass im Elektrolytraum (7) in der Kathodenhalbschale (11) Profileinbauten (1) vorgesehen sind, in die ein oberer Rand (19) der Gas-Diffusions-Elektrode (3) ragt, auf dem eine Dichtung (2) angebracht ist, die die Gas-Diffusions-Elektrode (3) in den Profileinbauten (1) fixiert., wobei die Gas-Diffusions-Elektrode (3) einen Biegeradius α von < 90 Grad bezogen auf die Lotrechte der gespannten Gas-Diffusions-Elektrode aufweist.

Durch diese erfindungsgemäße Fixierung in der Elektrolysezelle, wird der Gasraum (22) vom Elektrolytraum (7) über die Biegung der Gas-Diffusions-Elektrode (3) hinreichend abgedichtet. Außerdem wird gewährleistet, dass die Profileinbauten derart ausgestaltet sind, dass sie das poröse Medium (8), das als Percolator eingesetzt wird, nicht beschädigt. Auch der einfache Membranaustausch ist gewährleistet, da auf Methoden zur Fixierung der Elektrode, wie Schweißen, die eine aufwändige Demontage erfordern, komplett verzichtet werden kann.

In vorteilhafter Ausgestaltung weist die der obere Rand (19) der Gas-Diffusions-Elektrode (3), der in die Profileinbauten (1) der Kathodenhalbschale (11) ragt, einen Biegeradius α von 55 - 75 Grad, bezogen auf die Lotrechte der gespannten Gas-Diffusions-Elektrode, auf.

Optional ist unter dem oberen Rand (19) der Gas-Diffusions-Elektrode (3), der mittels einer Dichtung (2) in den Profileinbauten (1) fixiert wird, eine weitere Schicht vorgesehen, wobei diese weitere Schicht vorzugsweise aus demselben Material wie die Gas-Diffusionselektrode aufgebaut ist. Unter dieser Schicht ist vorteilhaft ein weiteres Stück einer Gas-Diffusionselektrode mit oder ohne Beschichtung zu verstehen, das zur weiteren Stabilisierung und Abdichtung unter die eigentliche Gas-Diffusionselektrode geschoben wird, zu verstehen.

Erfindungsgemäß ist es möglich, dass die Profileinbauten (1) der Kathodenhalbschale (11) jedwede geometrische Ausgestaltung aufweisen, und bevorzugt eine V- oder Trapez-Form aufweisen, und besonders bevorzugt eine U-Form aufweisen.

Mit Vorteil sind die Dichtungen (2), die in den Profileinbauten (1) auf dem oberen Rand (19) der Gas-Diffusions-Elektrode (3) vorgesehen sind, Hohlkammerdichtungen. In bevorzugter Ausführungsform sind diese Dichtungen (2) aus einem bis zu Temperaturen von ca. 100°C Laugen- und Sauerstoff-resistenten Material aufgebaut.

Des Weiteren beansprucht die vorliegende Erfindung Verwendungsmöglichkeiten der erfindungsgemäßen elektrochemischen Zelle. Zum einen soll die elektrochemische Zelle in einem elektrochemischen Block Verwendung finden, in dem eine Vielzahl von elektrochemischen Zellen stapelförmig angeordnet werden.

Unter einem elektrochemischen Block wird ein Apparat verstanden, der aus mehreren nebeneinander in einem Stapel angeordneten und in elektrischem Kontakt stehenden plattenförmigen elektrochemischen Zellen aufgebaut ist, die Einlässe und Auslässe für sämtliche benötigten und entstehenden Elektrolyte und Gase besitzt. Es handelt sich also um eine Hintereinanderschaltung mehrerer Einzelelemente, die jeweils Elektroden besitzen, die über eine geeignete Membran voneinander getrennt werden und die in ein Gehäuse zur Aufnahme dieser Einzelelemente eingepasst werden. Bei der Elektrolyse ist dies beispielsweise durch die Verwendung von Elektrolyseure realisiert, in dem die Elektrolysezellen stapelförmig angeordnet sind.

Mit Vorteil wird die vorliegende elektrochemische Zelle als Batterie verwendet, in der chemische Energie durch eine elektrochemische Redoxreaktion in elektrische Energie umgewandelt wird.

Eine weitere Verwendungsmöglichkeit der elektrochemischen Zelle besteht durch den Einsatz als Brennstoffzelle, in der chemische Energie durch Zuführen eines Brennstoffes und eines Oxidationsmittels in elektrische Energie umgewandelt wird.

Nachfolgend soll anhand von Fig. 1, 2 und 3 eine Ausführungsvariante der Erfindung näher erläutert werden.
- Fig. 1:: Eine schematische Verfahrensskizze einer erfindungsgemäßen elektrochemischen Zelle in Gesamtansicht
- Fig. 2:: Eine schematische Verfahrensskizze des Kopfbereichs (oberen Bereichs) einer erfindungsgemäßen elektrochemischen Zelle
- Fig. 3:: Eine schematische Verfahrensskizze des Bodenbereichs (unteren Bereichs) einer erfindungsgemäßen elektrochemischen Zelle

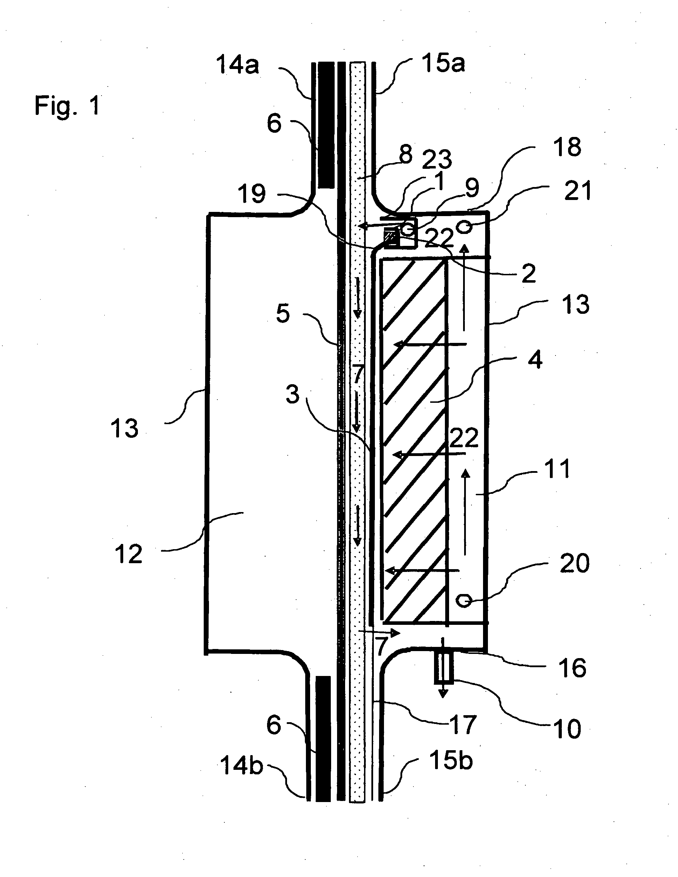

Fig. 1, 2 und 3 zeigen eine erfindungsgemäße elektrochemischen Zelle, die eine Anodenhalbschale 12 und eine Kathodenhalbschale 11 umfasst, die durch eine Membran 5 separiert wird. Beide Halbschalen 11, 12 besitzen eine Außenwandung 13 und rahmenartig ausgestaltete Flanschbereiche 14a, 14b, 15a, 15b. Die Flanschbereiche der Kathodenhalbschale 15a, 15b und die Flanschbereiche der Anodenhalbschale 14a, 14b bilden am oberen Ende der Elektrolysezelle 19 und am unteren Ende der Elektrolysezelle 16 Kontaktbereiche, zwischen die das Interieur, wie Membran 5, poröse Medien 8, Rahmendichtungen 6 und eventuell weitere Komponenten geklemmt werden. Durch diese Klemmung kann beispielsweise die Fixierung der Membran 5 und der porösen Medien 8 erreicht werden. Die porösen Medien dienen im Betrieb der elektrochemischen Zelle als Percolator, wobei man Elektrolyt zwischen der Membran 5 und der Gas-Diffusions-Elektrode 3 vom oberen Ende der elektrochemischen Zelle 19 zum unteren Ende der elektrochemischen Zelle 16 laufen lässt, der über den Elektrolytzulauf 9 in die elektrochemische Zelle strömt. Anhand dieses Elektrolytflusses sind in dieser Beschreibung auch die Begriffe "oben" bzw. Kopfbereich und "unten" bzw. Bodenbereich definiert.

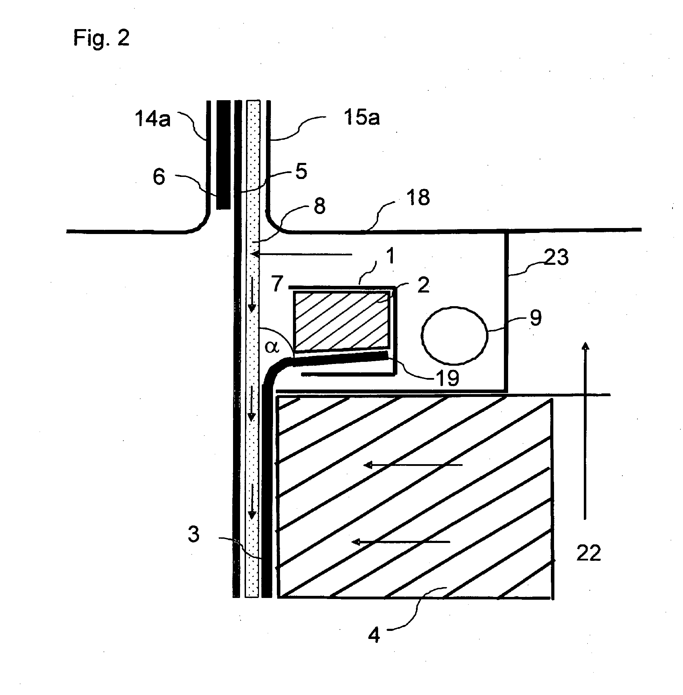

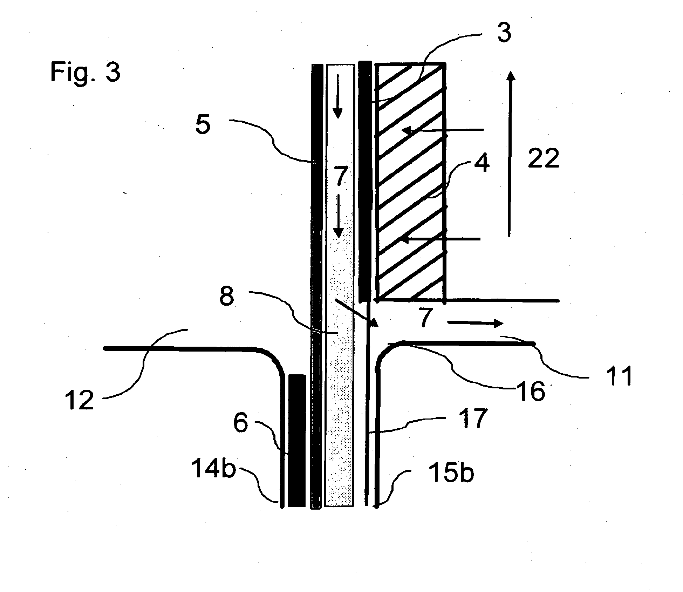

Die Gas-Diffusions-Elektrode 3 wird durch Stützelemente 4 in der Elektrolysezelle gehalten. Die Gas-Diffusions-Elektrode 3 selbst ist aus einem Flüssigkeits-durchlässigen Träger, der mit einem Katalysatormaterial beschichtet ist, aufgebaut. Dabei bildet der mit Katalysator beschichtete Bereich der Gas-Diffusions-Elektrode 3 den aktiven Bereich, an dem die elektrochemische Reaktion der Kathode abläuft. Dieser aktive Bereich umfasst die gesamte Gas-Diffusions-Elektrode, bis auf einen unteren Rand 17, an dem keine elektrochemische Reaktion mehr ablaufen kann. Dieser untere Rand 17 der Gas-Diffusions-Elektrode 3 wird am unteren Ende der Elektrolysezelle 16 in den Kontaktbereich der rahmenartigen Flanschbereiche 14b und 15b beider Halbschale 11, 12 geklemmt. Fig. 3 zeigt diese Anordnung im Detail. Da der Träger des Katalysatormaterials flüssigkeitsdurchlässig ist, kann der Elektrolyt, durch den Träger zu einer Vorrichtung geleitet werden, über den der Elektrolyt die elektrochemsiche Zelle verläßt. Das obere Ende 19 der Gas-Diffusions-Elektrode 3 liegt in beschichteter Form vor und wird zur Befestigung in Profileinbauten geführt, in denen es über eine Dichtung 2 befestigt wird. Diese Anordnung ist detailliert in Fig. 2 gezeigt. Dabei weist die Gas-Diffusions-Elektrode 3 einen Biegeradius α von < 90 Grad auf. Diese Angabe bezieht sich auf die Lotrechte einer gespannten Gas-Diffusions-Elektrode 3, die also an ihrem oberen Ende 18 und an ihrem unteren Ende 17 in der Elektrolysezelle befestigt und eingespannt ist. Dabei wird die Gas-Diffusionselektrode 3 über eine Dichtung 2 in den Profileinbauten 1, die sich im Elektrolytraum 7 befinden, gespannt. Der Elektrolytraum 7 wird durch Mittel zur Abgrenzung von Elektrolytraum und Gasraum 23 gebildet. Die jederzeit demontierbare Fixierung der Gas-Diffusionselektrode 3 in den Profileinbauten 1 erlaubt über die Biegung der Gas-Diffusionselektroden 3 auch die hinreichende Abdichtung des Elektrolytraums 7 vom Gasraum 22 im Kopfbereich der elektrochemischen Zelle.

Vorteile, die sich aus der Erfindung ergeben:
- einfacher Ein- und Ausbau der Gas-Diffusions-Elektrode
- hinreichende Abdichtung des Gasraums gegenüber dem Elektrolytraum durch die erfindungsgemäße Befestigung der Gas-Diffusions-Elektrode gewährleistet
- große aktive Elektrodenoberfläche steht zur Verfügung, die für die elektrochemische Reaktion genutzt werden kann

### Bezugszeichenliste

- 1: Profileinbauten
- 2: Dichtung
- 3: Gas-Diffusions-Elektrode
- 4: Stützsystem
- 5: Membran
- 6: Rahmendichtung
- 7: Elektrolytraum
- 8: poröses Medium
- 9: Vorrichtung für Elektrolytzulauf
- 10: Vorrichtung für Elektrolytablauf
- 11: Kathodenhalbschale
- 12: Anodenhalbschale
- 13: Außenwandung
- 14a, b: Flanschbereich der Anodenhalbschale
- 15a, b: Flanschbereich der Kathodenhalbschale
- 16: unteres Ende der elektrochemischen Zelle
- 17: unterer Rand der Gas-Diffusions-Elektrode
- 18: oberes Ende der elektrochemischen Zelle
- 19: oberer Rand der Gas-Diffusions-Elektrode
- 20: Vorrichtung für Gaszufuhr
- 21: Vorrichtung für Gasabfuhr
- 22: Gasraum
- 23: Mittel zur Abgrenzung von Elektrolytraum und Gasraum

## Patentansprüche

1. Elektrochemische Zelle, umfassend
■ eine Anoden- (12) und eine Kathodenhalbschale (11), die durch eine Membran (5) voneinander separiert werden, aufweisend die entsprechenden Elektroden,
■ die Anoden- (12) und die Kathodenhalbschale (11), die jeweils eine Außenwandung (13) besitzen, und die jeweils im Kontaktbereich beider Halbschalen Flanschbereiche (14a, 14b, 15a, 15b) aufweisen, welche rahmenartig ausgestaltet sind,
■ eine Gas-Diffusions-Elektrode (3), die aus einem Flüssigkeits-durchlässigen Träger besteht, der mit einem Katalysatormaterial beschichtet ist, wobei die Gas-Diffusions-Elektrode (3) an ihrem unteren Rand (17) einen nicht mit Katalysator beschichteten Bereich aufweist, der am unteren Ende der elektrochemischen Zelle (16) im Kontaktbereich beider Halbschalen zwischen die Flanschbereiche der Außenwandung der Kathodenhalbschale (15b) und die Flanschbereiche der Außenwandung der Anodenhalbschale (14b) ragt und ein poröses Medium (8) parallel zwischen der Gas-Diffusions-Elektrode (3) und der Membran (5) angeordnet ist,
■ Vorrichtungen zum Zu- und Abführen von Gas (20, 21) und Elektrolyt (9, 10), wobei ein Gasraum (22) von einem Elektrolytraum (7) durch entsprechende Mittel (23) abgegrenzt wird,
**dadurch gekennzeichnet, dass**
im Elektrolytraum (7) in der Kathodenhalbschale (11) Profileinbauten (1) vorgesehen sind, in die ein oberer Rand (19) der Gas-Diffusions-Elektrode (3) ragt, auf dem eine Dichtung (2) angebracht ist, die die Gas-Diffusions-Elektrode (3) in den Profileinbauten (1) fixiert, wobei die Gas-Diffusions-Elektrode (3) einen Biegeradius α von < 90 Grad bezogen auf die Lotrechte der gespannten Gas-Diffusions-Elektrode aufweist.

2. Vorrichtung nach Anspruch 1, **dadurch gekennzeichnet, dass** der obere Rand (19) der Gas-Diffusions-Elektrode (3), der in die Profileinbauten (1) der Kathodenhalbschale (11) ragt, einen Biegeradius α von 55 - 75 Grad, bezogen auf die Lotrechte der gespannte Gas-Diffusions-Elektrode, aufweist.

3. Vorrichtung nach einem der Ansprüche 1 oder 2, **dadurch gekennzeichnet, dass** unter dem oberen Rand (19) der Gas-Diffusions-Elektrode (3), der mittels einer Dichtung (2) in den Profileinbauten (1) fixiert wird, eine weitere Schicht vorgesehen ist, wobei diese weitere Schicht vorzugsweise aus demselben Material wie die Gas-Diffusionselektrode aufgebaut ist.

4. Vorrichtung nach einem der Ansprüche 1 bis 3, **dadurch gekennzeichnet, dass** die Profileinbauten (1) der Kathodenhalbschale (11) jedwede geometrische Ausgestaltung aufweisen, und bevorzugt eine V- oder Trapez-Form aufweisen, und besonders bevorzugt eine U-Form aufweisen.

5. Vorrichtung nach einem der Ansprüche 1 bis 4, **dadurch gekennzeichnet, dass** die Dichtungen (2), die in den Profileinbauten (1) auf dem oberen Rand (19) der Gas-Diffusions-Elektrode (3) vorgesehen sind, Hohlkammerdichtungen sind.

6. Vorrichtung nach Anspruch 5, **dadurch gekennzeichnet, dass** die Dichtungen (2) aus einem bis zu Temperaturen von ca. 100°C Laugen- und Sauerstoff-resistenten Material aufgebaut sind.

7. Verwendung der elektrochemischen Zelle nach Anspruch 1 als Elektrolysezelle in einem Elektrolyseur, in dem eine Vielzahl von Elektrolysezellen stapelförmig angeordnet werden.

8. Verwendung der elektrochemischen Zelle nach Anspruch 1 als Batterie, in der chemische Energie durch eine elektrochemische Redoxreaktion in elektrische Energie umgewandelt wird.

9. Verwendung der elektrochemischen Zelle nach Anspruch 1 als Brennstoffzelle, in der chemische Energie durch Zuführen eines Brennstoffes und eines Oxidationsmittels in elektrische Energie umgewandelt wird.

## Claims

1. Electrochemical cell, comprising
- an anode half-shell (12) and a cathode half-shell (11), which are separated from each other by a membrane (5), comprising the corresponding electrodes,
- the anode half-shell (12) and the cathode half-shell (11), each having an outer wall (13) and each comprising flange portions (14a, 14b, 15a, 15b) within the contact region of the two half-shells, which are shaped like frames,
- a gas diffusion electrode (3) consisting of a liquid-permeable support, which is coated with a catalyst material, wherein the gas diffusion electrode (3) comprises at its lower edge (17) an area that is not coated with the catalyst, which protrudes at the lower end of the electrochemical cell (16) in the contact area of the two half-shells between the flange portions of the outer wall of the cathode half-shell (15b) and the flange portions of the outer wall of the anode half-shell (14b) and a porous medium (8) is arranged parallel between the gas diffusion electrode (3) and the membrane (5),
- means for supplying and discharging gas (20, 21) and electrolyte (9, 10), wherein a gas space (22) is isolated from an electrolyte space (7) by appropriate means (23),
**characterized in that**
in the electrolyte space (7) within the cathode half-shell (11) profiled installations (1) are provided, into which an upper edge (19) of the gas diffusion electrode (3) protrudes, on which a seal (2) is mounted, which fixes the gas diffusion electrode (3) in the profiled installations (1), wherein the gas diffusion electrode (3) exhibits a bending radius α of < 90 degrees relative to the vertical of the tensional gas diffusion electrode.

2. Device according to claim 1, **characterized in that** the upper edge (19) of the gas diffusion electrode (3), which protrudes into the profiled installations (1) of the cathode half-shell (11), exhibits a bending radius α of < 55 - 75 degrees relative to the vertical of the tensional gas diffusion electrode.

3. Device according to one of claims 1 or 2, **characterized in that** below the upper edge (19) of the gas diffusion electrode (3), which is fixed by a seal (2) in the profiled installations (1), a further layer is provided, wherein this further layer is preferably composed of the same material as the gas diffusion electrode.

4. Device according to one of claims 1 to 3, **characterized in that** the profiled installations (1) of the cathode half-shell (11) are of any geometric configuration, and preferably have a V- or trapezoidal shape, and more preferably have a U-shape.

5. Device according to one of claims 1 to 4, **characterized in that** the seals (2), which are provided in the profiled installations (1) on the upper edge (19) of the gas diffusion electrode (3), are hollow chamber seals.

6. Device according to claim 5, **characterized in that** the seals (2) are composed of a material that is resistant to caustic soda and oxygen up to temperatures of about 100 °C.

7. Use of the electrochemical cell according to claim 1 as an electrolytic cell in an electrolyzer, in which a plurality of electrolysis cells are arranged in the form of stacks.

8. Use of the electrochemical cell according to claim 1 as a battery, in which chemical energy is converted to electric energy by an electrochemical redox reaction.

9. Use of the electrochemical cell according to claim 1 as a fuel cell, in which chemical energy is converted to electrical energy by supplying a fuel and an oxidant.

## Revendications

1. Cellule électrochimique, comprenant :
- une demi-coque anodique (12) et une demi-coque cathodique (11), séparées l'une de l'autre par une membrane (5) et présentant les électrodes correspondantes,
- la demi-coque anodique (12) et la demi-coque cathodique (11) qui possèdent respectivement une paroi extérieure (13), et qui présentent respectivement dans la zone de contact des deux demi-coques des zones de flasque (14a, 14b, 15a, 15b) qui sont conçues en forme de cadre,
- une électrode à diffusion gazeuse (3) constituée d'un support perméable aux liquides, recouvert d'un matériau catalyseur, l'électrode à diffusion gazeuse (3) présentant au niveau de son bord inférieur (17) une zone non recouverte de catalyseur, qui fait saillie, à l'extrémité inférieure de la cellule électrochimique (16), dans la zone de contact des deux demi-coques entre les zones de flasque de la paroi extérieure de la demi-coque cathodique (15b) et les zones de flasque de la paroi extérieure de la demi-coque anodique (14b), et un milieu poreux (8) étant disposé parallèlement entre l'électrode à diffusion gazeuse (3) et la membrane (5),
- des dispositifs d'acheminement et d'évacuation de gaz (20, 21) et d'électrolyte (9, 10), une chambre de gaz (22) étant délimitée par rapport à une chambre d'électrolyte (7) par des moyens (23) correspondants,
**caractérisée en ce que**
sont prévus dans la chambre d'électrolyte (7), dans la demi-coque cathodique (11), des éléments encastrés profilés (1) dans lesquels fait saillie un bord supérieur (19) de l'électrode à diffusion gazeuse (3) sur lequel est appliquée une garniture d'étanchéité (2) qui fixe l'électrode à diffusion gazeuse (3) dans les éléments encastrés profilés (1), l'électrode à diffusion gazeuse (3) présentant un rayon de courbure α de < 90 degrés rapporté à la perpendiculaire de l'électrode à diffusion gazeuse serrée.

2. Dispositif selon la revendication 1, **caractérisé en ce que** le bord supérieur (19) de l'électrode à diffusion gazeuse (3), qui fait saillie dans les éléments encastrés profilés (1) de la demi-coque cathodique (11), présente un rayon de courbure α de 55 - 75 degrés, rapporté à la perpendiculaire de l'électrode à diffusion gazeuse serrée.

3. Dispositif selon l'une des revendications 1 ou 2, **caractérisé en ce qu'**est prévue sous le bord supérieur (19) de l'électrode à diffusion gazeuse (3), lequel est fixé à l'aide d'une garniture d'étanchéité (2) dans les éléments encastrés profilés (1), une autre couche qui est, de préférence, constituée du même matériau que l'électrode à diffusion gazeuse.

4. Dispositif selon l'une des revendications 1 à 3, **caractérisé en ce que** les éléments encastrés profilés (1) de la demi-coque cathodique (11) présentent une configuration géométrique quelconque, et de préférence, une forme en V ou trapézoïdale, et de manière particulièrement préférée une forme en U.

5. Dispositif selon l'une des revendications 1 à 4, **caractérisé en ce que** les garnitures d'étanchéité (2) qui sont prévues dans les éléments encastrés profilés (1) sur le bord supérieur (19) de l'électrode à diffusion gazeuse (3) sont des garnitures d'étanchéité à chambre creuse.

6. Dispositif selon la revendication 5, **caractérisé en ce que** les garnitures d'étanchéité (2) sont réalisées dans un matériau résistant aux alcalis et à l'oxygène jusqu'à des températures d'environ 100°C.

7. Utilisation de la cellule électrochimique selon la revendication 1 comme cellule électrolytique dans un électrolyseur dans lequel sont disposées en pile une pluralité de cellules électrolytiques.

8. Utilisation de la cellule électrochimique selon la revendication 1 comme batterie, dans laquelle de l'énergie chimique est convertie en énergie électrique par une réaction électrochimique de type redox.

9. Utilisation de la cellule électrochimique selon la revendication 1 comme pile à combustible dans laquelle l'énergie chimique est convertie en énergie électrique par apport d'un combustible et d'un agent d'oxydation.
